# EUROPÄISCHE PATENTSCHRIFT

(11) **EP 1 373 350 B1**
(45) Veröffentlichungstag und Bekanntmachung des Hinweises auf die Patenterteilung: **15.12.2010**
(21) Anmeldenummer: 02722161.3
(22) Anmeldetag: 28.02.2002
(51) Int. Cl.: C08G 18/34, C08G 18/38, C08G 18/08, C09D 175/04, D06M 15/564

(54) **VERWENDUNG VON ANIONISCHEN POLYMEREN, DIE URETHAN- UND/ODER HARNSTOFFGRUPPEN AUFWEISEN, ZUR MODIFIZIERUNG VON OBERFLÄCHEN**
USE OF ANIONIC POLYMERS THAT CARRY URETHANE AND/OR UREA GROUPS FOR MODIFYING SURFACES
UTILISATION DE POLYMERES ANIONIQUES PRESENTANT DES GROUPES URETHANNE ET/OU UREE, DESTINES A LA MODIFICATION DE SURFACES

(30) Priorität: 01.03.2001 DE 10109803
(43) Veröffentlichungstag der Anmeldung: 02.01.2004
(73) Patentinhaber: BASF SE, 67056 Ludwigshafen (DE)
(72) Erfinder: ANDRE, Valerie, 67063 Ludwigshafen (DE); BERTLEFF, Werner, 68519 Viernheim (DE); HÄBERLE, Karl, 67346 Speyer (DE); MEFFERT, Helmut, 91438 Bad Windsheim (DE); SCHMIDT, Kati, 67063 Ludwigshafen (DE); SCHREPP, Wolfgang, 69118 Heidelberg (DE)
(86) Internationale Anmeldenummer: PCT/EP2002/002201
(87) Internationale Veröffentlichungsnummer: WO 2002/070578

(56) Entgegenhaltungen:
- DE-A- 19 849 891
- US-A- 3 412 054
- US-A- 4 156 675
- US-A- 5 489 389
- US-A- 5 583 176

## Beschreibung

Die vorliegende Erfindung betrifft linien-, flächenförmige oder dreidimensionale Gebilde, die zumindest auf ihrer Oberfläche eine hydrophilierend wirkende Menge eines Polymers aufweisen, das Urethan- und/oder Harnstoffgruppen sowie anionische Gruppen aufweist. Die Erfindung betrifft weiterhin ein Polymer, erhalten aus wenigstens einem Polyisocyanat und wenigstens einer Verbindung mit mindestens einer gegenüber Isocyanatgruppen reaktiven Gruppe und mindestens einer anionischen Gruppe oder in eine anionische Gruppe überführbaren Gruppe in eingebauter Form sowie ein Verfahren zur Modifizierung der Oberflächeneigenschaften linien-, flächenförmiger oder dreidimensionaler Gebilde.

Gegenstände aus synthetischen Materialien, wie duroplastische oder thermoplastische Kunststoffe, weisen in der Regel hydrophobe Oberflächeneigenschaften auf. Vielfach sind hydrophobe Eigenschaften jedoch unerwünscht, wenn die Gegenstände beklebt, beschichtet, bedruckt, gefärbt oder lackiert werden sollen, da die meisten Klebstoffe, Beschichtungsmittel oder Anstrichmittel auf hydrophoben Oberflächen nur unzureichende Haftung zeigen. Hydrophobe Eigenschaften sind auch bei flächenförmigen textilen Gebilden, wie insbesondere Vliesstoffen unerwünscht. Vliesstoffe werden z. B. als Putz- und Wischtücher, Spültücher und Servietten verwendet. Bei diesen Anwendungen ist es wichtig, dass z. B. verschüttete Flüssigkeiten, wie Milch, Kaffee usw. beim Aufwischen rasch und vollständig aufgesaugt und feuchte Oberflächen möglichst vollständig getrocknet werden. Ein Putztuch saugt Flüssigkeiten umso rascher auf, je schneller deren Transport auf der Faseroberfläche erfolgt, wobei Fasern mit hydrophiler Oberfläche von wässrigen Flüssigkeiten leicht und rasch benetzt werden.

Um die Oberflächen von Folien oder Formkörpern zu hydrophilieren sind verschiedene Verfahren üblich. Z. B. können die Oberflächen von Kunststoffartikeln durch gasförmiges Fluor aktiviert werden. Dieses Verfahren erfordert allerdings das Arbeiten mit dem hochgiftigen Gas Fluor unter einem erhöhten apparativen Aufwand. Daneben werden Korona- oder Plasmabehandlungen angewandt, um die Hydrophilie der Oberfläche verschiedener Materialien wie Kunststoffen oder Metallen zu erhöhen.

Zur Verbesserung der Wasseraufnahmeeigenschaften von Vliesstoffen werden auch oberflächenaktive hydrophilierende Agentien, wie Emulgatoren, Tenside oder Netzmittel eingesetzt. Hierdurch wird eine ausgezeichnete Anfangshydrophilie erreicht. Diese Vliesstoffe weisen aber den Nachteil auf, dass die hydrophilen Agentien durch Wasser oder andere wässrige Medien allmählich ausgewaschen werden.

Nach mehrmaligem Wasserkontakt wird das Erzeugnis zunehmend hydrophober. Ein weiterer Nachteil der bekannten oberflächenaktiven Agentien besteht in der starken Herabsetzung der Grenzflächenspannung von Wasser, so dass in vielen Anwendungen, insbesondere bei Hygiene- und Windelvliesen die Permeationanaigung und das Netzvermögen der aufgesaugten Flüssigkeit unerwünscht erhöht ist.

Die WO 98/27263 offenbart beständig hydrophile Polymerbeschichtungen für Polyester-, Polypropylen- und ähnliche Fasern. Die Beschichtung enthält bestimmte Polyoxyproylamine oder Polypropylenoxidpolymere und Ethylentherephthalateinheiten enthaltende hydrophile Polyestercopolymere.

Die WO 97/00351 beschreibt dauerhaft hydrophile Polymerbeschichtungen für Polyester-, Polyethylen- oder Polypropylenfasern und -gewebe, die hydrophile Copolyester sowie Polypropylenoxidpolymere enthalten.

Die DE 100 29 026 A1 beschreibt die Verwendung von kationischen Polymeren, die Urethan- und/oder Harnstoffgruppen aufweisen, zur Modifizierung von Oberflächen.

Der vorliegenden Erfindung liegt die Aufgabe zugrunde, hydrophil ausgerüstete linien-, flächenförmige oder dreidimensionale Gebilde sowie ein Verfahren zur Erhöhung der Oberflächenhydrophilie derartiger Gebilde bereitzustellen.

Erfindungsgemäß wird diese Aufgabe gelöst durch ein linien-, flächenförmiges oder dreidimensionales Gebilde, enthaltend zumindest auf seiner Oberfläche eine hydrophilierend wirkende Menge wenigstens eines Polymers, das Urethan- und/oder Harnstoffgruppen sowie anionische Gruppen aufweist, wobei der Gehalt an Urethan- und/oder Harnstoffgruppen mindestens 2 mol/kg Polymer beträgt, wobei das Polymer einen Gehalt an anionischen Gruppen von 0,5 bis 5 mol/kg aufweist und wobei die Ausrüstung des Gebildes mit dem Polymeren durch Behandeln des Gebildes mit einer verdünnten Lösung des Polymers erfolgt, wobei der Polymergehalt der Lösung im Bereich von wenigstens 0,01 bis 20 Gew.-%, bezogen auf das Gewicht der Lösung, liegt, oder man zur Hydrophilierung der Oberflächen das Polymer dem Werkstoff, aus dem das Gebilde aufgebaut ist, zusetzt und anschließend hieraus das Gebilde herstellt, und wobei das Gebilde ein linien- oder flächenförmiges textiles Gebilde, eine Kunststofffolie oder ein Kunststoffformkörper ist.

Unter "linienförmigen Gebilden" werden insbesondere Fasern, Filamente, Garne, Fäden und dergleichen verstanden.

"Flächenförmige Gebilde" sind insbesondere Gewebe, Gewirke, Filze, Vliese oder Vliesstoffe, wobei letztere bevorzugt sind. Zur Herstellung eines Vliesstoffs wird ein Gefüge von Fasern (Vlies) abgelegt, das anschließend nach unterschiedlichen Verfahren zu Vliesstoffen verfestigt wird. Z. B. wird das Vlies mit einem wässrigen Bindemittel, z. B. einem Polymerlatex behandelt und anschließend, gegebenenfalls nach Entfernung von überschüssigem Bindemittel, getrocknet und gegebenenfalls gehärtet. Flächenförmige Gebilde sind auch Folien, Papier und vergleichbare zweidimensionale Gebilde.

Unter flächenförmigen textilen Gebilden werden im Rahmen der vorliegenden Anmeldung auch Textilverbundstoffe, wie z. B. Teppiche, kaschierte und laminierte Textilien etc. verstanden.

Dreidimensionale Gebilde sind allgemein Formkörper unterschiedlichster Dimensionen. Dazu zählen erfindungsgemäß Kunststoffformkörper.

Vorzugsweise umfassen die erfindungsgemäß eingesetzten Gebilde wenigstens ein natürliches oder synthetisches polymeres Material. Geeignete polymere Materialien sind z. B. Polymere mit im Wesentlichen hydrophoben Oberflächeneigenschaften, die durch radikalische Polymerisation von Monomeren mit mindestens einer ethylenisch ungesättigten Doppelbindung erhältlich sind. Geeignete Monomere sind z. B. ausgewählt unter Estern α,β-ethylenisch ungesättigter Mono- und Dicarbonsäuren mit einwertigen Alkoholen, Amiden α,β-ethylenisch ungesättigter Mono- und/oder Dicarbonsäuren mit N-Alkyl- und N,N-Dialkylaminen, Estern von Vinylalkohol oder Allylalkohol mit Monocarbonsäuren, Vinylethern, Vinylaromaten, Vinylhalogeniden, Vinylidenhalogeniden, (Meth)acrylnitril, Mono- und Diolefinen und Mischungen davon. Geeignete polymere Materialien sind weiterhin Polyamide, Polyester, Aldehydharze, Epoxidharze und Polyurethane. Die polymeren Materialien können einzeln oder in Form von Mischungen eingesetzt werden.

Bevorzugte polymere Materialien sind:
1. Polymere von Mono- und Diolefinen, beispielsweise Polyethylen, Polypropylen, Polyisobutylen, Polybuten-1, Poly-4-methyl-penten-1, Polyisopren oder Polybutadien sowie Polymerisate von Cycloolefinen, wie z. B. von Cyclopenten oder Norbornen;
2. Copolymere von Mono- und Diolefinen untereinander oder mit wenigstens einem weiteren der zuvor genannten ethylenisch ungesättigten Monomeren;
3. Vinylaromaten, insbesondere Polystyrol, Poly-(p-methylstyrol) und Poly-(α-methylstyrol);.
4. Copolymere von Vinylaromaten, wie Styrol oder α-Methylstyrol, z. B. mit Dienen oder Acrylderivaten, wie Styrol-Butadien, Styrol-Acrylnitril, Styrol-Alkyl(meth)acrylat, Styrol-Butadien-Alkyl(meth)acrylat, Styrol-Maleinsäureanhydrid, Styrol-Acrylnitril-Methyl(meth)acrylat;
5. Pfropfcopolymere von Vinylaromaten, wie Styrol oder α-Methylstyrol, wie z. B. Styrol auf Polybutadien;
6. Halogenhaltige Homo- und Copolymere, z. B. von Vinylhalogeniden und Vinylidenhalogeniden;
7. Polymere, die sich von α,β-ungesättigten Säuren und deren Derivaten ableiten, wie Polyacrylate und Poly(meth)acrylate, Poly(meth)acrylamide und Poly(meth)acrylnitrile;
8. Polyurethane mit im Wesentlichen hydrophoben Oberflächeneigenschaften;
9. Polyamide und Copolyamide, die sich z. B. von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide etc.;
10. Polyharnstoffe, Polyimide, Polyamidimide, Polyetherimide, Polyesterimide, Polyhydantoine und Polybenzimidazole;
11. Polyester, die sich von Dicarbonsäuren und Dialkoholen und/ oder von Hydroxycarbonsäuren und/oder den entsprechenden Lactonen ableiten;
12. Polycarbonate und Polyestercarbonate;
13. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze;
14. Vernetzbare Acrylharze, die sich von substituierten Acrylsäureestern ableiten, wie z. B. von Epoxyacrylaten, Urethanacrylaten oder Polyesteracrylaten;
15. Epoxidharze, die sich beispielsweise von aliphatischen, cycloaliphatischen, heterocyclischen oder aromatischen Glycidylverbindungen ableiten, z. B. Produkte von Bisphenol-A-diglycidylethern;
16. Binäre und polynäre Mischungen (Polyblends) der vorgenannten Polymeren.

Bevorzugt sind linien-, flächenförmige oder dreidimensionale Gebilde, die wenigstens ein polymeres Material umfassen, das ausgewählt ist unter Polyolefinen, Polyestern, Polyamiden, polyacrylnitril, Polyaromaten, Styrol-Acrylnitril-Copolymeren (SAN), Acrylnitril-Butadien-Styrol-Copolymeren (ABS), Polyurethanen und Mischungen (Polyblends) der vorgenannten Polymeren.

Vorzugsweise handelt es sich bei den erfindungsgemäß eingesetzten Gebilden um Kunststofffasern insbesondere aus Polyolefinen, wie z. B. Polyethylen und Polypropylen, Copolymeren von Monoolefinen untereinander oder mit weiteren ethylenisch ungesättigten Monomeren, Polyestern, Polyacrylnitril und Polyamiden, wie z. B. Polyamid 6 und Polyamid 6,6.

Vorzugsweise handelt es sich bei den erfindungsgemäß eingesetzten Gebilden weiterhin um flächenförmige Gebilde und insbesondere um Filme oder Folien. Diese enthalten vorzugsweise ein Polymer, das ausgewählt ist unter Polyolefinen, wie Polyethylen und/oder Polypropylen, Polymeren halogenierter Monomerer, wie z. B. Polyvinylchlorid und/oder Polytetrafluorethylen, Polyestern und Mischungen davon.

Vorzugsweise handelt es sich bei dem erfindungsgemäß eingesetzten Gebilde weiterhin um einen Formkörper. Dieser umfasst vorzugsweise wenigstens ein polymeres Material, das ausgewählt ist unter Polyolefinen, wie z. B. Polyethylen und/oder Polypropylen, Polyaromaten, wie Polystyrol, Polymeren halogenierter Monomerer, wie Polyvinylchlorid und/oder Polytetrafluorethylen, Polyestern, Polyacrylnitril, Styrol-Acrylnitril-Copolymeren, Acrylnitril-Butadien-Styrol-Copolymeren, Polyamiden, wie Polyamid 6 und/oder Polyamid 6,6, Polyurethanen und Mischungen davon.

Erfindungsgemäß wird zur Modifizierung der Oberflächeneigenschaften wenigstens ein Polymer eingesetzt, das Urethan- und/oder Harnstoffgruppen sowie anionische Gruppen aufweist.

Bevorzugt sind Polymere, erhalten aus
a) wenigstens einem Polyisocyanat,
b) wenigstens einer Verbindung mit mindestens einer gegenüber Isocyanatgruppen reaktiven Gruppe und zusätzlich mindestens einer anionischen oder in eine anionische Gruppe überführbaren Gruppe
sowie gegebenenfalls wenigstens einer weiteren, von b) verschiedenen Verbindung mit mindestens einer gegenüber Isocyanatgruppen reaktiven Gruppe. Dabei enthält das Polymer immer einen Anteil an anionischen (negativ geladenen) Gruppen. Geladene anionische Gruppen lassen sich aus den in anionische Gruppen überführbaren (ungeladenen) Gruppen der Verbindungen der Komponente b) und/oder des Polymers durch Deprotonierung erzeugen. Im Polymer liegt dann wenigstens ein Teil der vormals in anionische Gruppen überführbaren Gruppen in Form seiner Umsetzungsprodukte mit wenigstens einem Neutralisierungs-(Deprotonierungs-)mittel vor.

Die Polyisocyanate a) sind vorzugsweise ausgewählt unter Verbindungen mit 2 bis 5 Isocyanatgruppen, Isocyanatpräpolymeren mit einer mittleren Anzahl von 2 bis 5 Isocyanatgruppen, Oligomeren von Di- und Polyisocyanaten mit freien NCO-Gruppen, wie Isocyanurat-, Biuret- und/oder Allophanatgruppen aufweisende Verbindungen und Mischungen davon. Geeignet sind weiterhin Verbindungen, die zusätzlich zu oder anstelle von freien Isocyanatgruppen funktionelle Gruppen aufweisen, welche Isocyanatgruppen freisetzen oder wie Isocyanatgruppen reagieren. Dazu zählen z. B. verkappte Isocyanatgruppen und Uretdiongruppen aufweisende Verbindungen. Bei den Isocyanuratgruppen aufweisenden Verbindungen handelt es sich insbesondere um einfache Triisocyanatoisocyanurate, d. h. cyclische Trimere von Diisocyanaten, oder um Gemische mit ihren höheren, mehr als einen Isocyanuratring aufweisenden Homologen. Biuretgruppen aufweisende Verbindungen können z. B. erhalten werden durch Addition von drei Molekülen Diisocyanat an ein Molekül Wasser. Verkappte Isocyanatgruppen entstehen bei der Umsetzung mit einem Blockierungsmittel, das beim Erhitzen der blockierten Isocyanatgruppen auf eine Temperatur, die mindestens der sogenannten Deblockierungstemperatur entspricht, die Isocyanatgruppen wieder freisetzt. Verbindungen, die Isocyanatgruppen blockieren (verkappen oder schützen) sind die üblichen, dem Fachmann bekannten. Dazu zählen z. B. Phenole, Caprolactam, Imidazole, Pyrazole, Pyrazoline, 1,2,4-Triazole, Diketopiperazine, Malonsäureester und Oxime.

Bevorzugt werden als Komponente a) aliphatische, cycloaliphatische und aromatische Diisocyanate eingesetzt. Geeignete aliphatische Diisocyanate weisen dann vorzugsweise einen Kohlenwasserstoffrest mit 4 bis 12 Kohlenstoffatomen auf. Geeignete cycloaliphatische und aromatische Diisocyanate weisen vorzugsweise einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen auf. Geeignete Diisocyanate sind z. B. Tetramethylendiisocyanat, Hexamethylendiisocyanat, 2,3,3-Trimethylhexamethylendiisocyanat, Dodecamethylendiisocyanat, 1,4-Cyclohexylendiisocyanat, Isophorondiisocyanat, Dicyclohexylmethandiisocyanat, 2,2-Bis-(4-isocyanatocyclohexyl)propan, 1,4-Phenylendiisocyanat, 2,4- und 2,6-Toluylendiisocyanat und deren Isomerengemische (z. B. 80 % 2,4- und 20 % 2,6-Isomer), 1,5-Naphthylendiisocyanat, 2,4- und 4,4'-Diphenylmethandiisocyanat, o- und m-Xylylendiisocyanat, Tetramethylxylylendiisocyanat, die Isomeren des Bis-(4-isocyanatocyclohexyl)methans, wie z. B. das trans/trans-, das cis/cis- und das cis/trans-Isomere sowie Gemische davon. Bevorzugt eingesetzte Diisocyanatgemische sind die Isomerengemische des Toluylendiisocyanats und Diphenylmethandiisocyanats und insbesondere ein Toluylendiisocyanat-Isomerengemisch aus etwa 80 % 2,4- und etwa 20 % 2,6-Isomer. Bevorzugt sind weiterhin Gemische, die wenigstens ein aromatisches und wenigstens ein aliphatisches und/oder cycloaliphatisches Diisocyanat umfassen. Dabei liegt das Mischungsverhältnis von aliphatischen und/oder cycloaliphatische zu aromatischen Diisocyanaten vorzugsweise in einem Bereich von etwa 4:1 bis 1:4. Besonders bevorzugt sind Mischungen, die 2,4- und/oder 2,6-Toluylendiisocyanat sowie Hexamethylendiisocyanat und/oder Isophorondiisocyanat enthalten. Ein geeignetes Triisocyanat ist z. B. Triphenylmethan-4,4',4''-triisocyanat. Weiterhin geeignet sind Isocyanatpräpolymere und Polyisocyanate, die durch Addition der zuvor genannten Diisocyanate an polyfunktionelle Hydroxyl- oder Amingruppenhaltige Verbindungen erhältlich sind. Dazu zählen z. B. die niedermolekularen Addukte von 3 Mol Diisocyanat, wie Hexamethylendiisocyanat, Isophorondiisocyanat etc. an dreiwertige Alkohole, wie z. B. Trimethylolpropan mit einem Molekulargewicht von in der Regel höchstens 400 g/mol. Bevorzugt werden Hexamethylendiisocyanat, Isophorondiisocyanat und Mischungen davon eingesetzt.

Bevorzugt sind die gegenüber Isocyanatgruppen reaktiven Gruppen der Verbindungen der Komponente b) ausgewählt unter Hydroxylgruppen, primären und sekundären Aminogruppen und Thiolgruppen. In Abhängigkeit von diesen Gruppen resultieren Polymere, die Urethangruppen, Harnstoffgruppen und/oder Thiocarbamatgruppen aufweisen.

Bei den anionischen oder in eine anionische Gruppe überführbaren Gruppen handelt es sich vorzugsweise um Carbonsäuregruppen, Phosphonsäuregruppen, Phosphorsäuregruppen und/oder Sulfonsäuregruppen und deren Umsetzungsprodukte mit wenigstens einem Neutralisierungsmittel. Bevorzugt sind Hydroxyalkylcarbonsäuren und Dihydroxyalkylcarbonsäuren, wobei die Alkylreste vorzugsweise 1 bis 10 Kohlenstoffatome aufweisen. Geeignete Hydroxycarbonsäuren sind z. B. Hydroxyessigsäure (Glykolsäure), Hydroxypropionsäure (Milchsäure), Hydroxybernsteinsäure (Apfelsäure) und die Salze davon. Bevorzugte Dihydroxyalkylcarbonsäuren sind 2,2-Di(hydroxymethyl)alkylcarbonsäuren der Formel 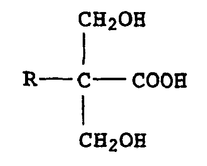 worin R für Hydroxymethyl, Wasserstoff oder C₁-C₂₀-Alkyl steht. Dazu zählt z. B. 2,2-Di(hydroxymethyl)essigsäure, 2,2,2-Tri(hydroxymethyl)essigsäure, 2,2-Di(hydroxymethyl)propionsäure (DMPA), 2,2-Di(hydroxymethyl)buttersäure, 2,2-Di(hydroxymethyl)pentansäure etc. Vorzugsweise wird 2,2-Di(hydroxymethyl)propionsäure (Dimethylolpropionsäure, DMPA) eingesetzt.

Geeignete Verbindungen b), die wenigstens eine Sulfonsäuregruppe oder ein Sulfonat als polare funktionelle Gruppe aufweisen, sind z. B. Diesterdiole oder Polyesterdiole von Dicarbonsäuren, die zusätzlich wenigstens eine Sulfonsäuregruppe oder Metallsulfonatgruppe aufweisen, mit aliphatischen, cycloaliphatischen oder aromatischen Diolen. Als Dicarbonsäuren können dabei z. B. Sulfobernsteinsäure, 4-Sulfophthalsäure, 5-Sulfoisophthalsäure, Sulfoterephthalsäure, 4-Sulfonaphthalin-2,7-dicarbonsäure, 5-(4-Sulfophenoxy)terephthalsäure oder die entsprechenden Metallsulfonate eingesetzt werden. Weitere geeignete Verbindungen b), die wenigstens eine Sulfonsäure- oder Sulfonatgruppe aufweisen, sind entsprechend substituierte geradkettige oder verzweigte aliphatische, cycloaliphatische oder aromatische Diole. Dazu zählen z. B. 2-Sulfo-1,4-butandiol, 2,5-Dimethyl-3-sulfo-2,5-hexandiol und deren Natrium- und Kaliumsalze.

Brauchbar sind auch Verbindungen b) der Formeln 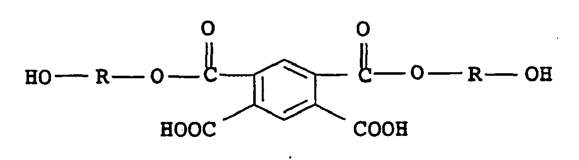 und/oder 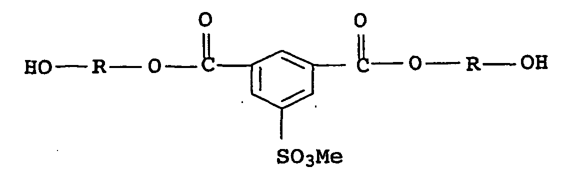 worin R jeweils für eine C₂-C₁₈-Alkylengruppe steht und Me für Na oder K steht.

Als Komponente b) brauchbar sind auch Verbindungen der Formeln

H₂N(CH₂)ₙ-NH-(CH₂)ₘ-COO-M⁺

H₂N(CH₂)ₙ-NH-(CH₂)ₘ-SO₃-M⁺

worin m und n unabhängig voneinander für eine ganze Zahl von 1 bis 8, insbesondere 1 bis 6, stehen und M für Wasserstoff, Li, Na, K oder Ammonium steht. Bevorzugt stehen bei den Verbindungen m und n für 2.

Geeignete Verbindungen b) mit wenigstens einer Thiolgruppe sind solche Verbindungen, die sich von den zuvor genannten Verbindungen b) mit mindestens einer Hydroxylgruppe durch (formalen) Ersatz einer, oder, soweit möglich, einiger oder aller OH-Gruppen durch eine SH-Gruppe ableiten.

Geeignete Verbindungen b) mit mindestens einer gegenüber Isocyanatgruppen reaktiven, primären und/oder sekundären Aminogruppe sind z. B. Aminocarbonsäuren, wie Lysin, Alanin, Valin, etc., Aminosulfonsäuren etc.

Geeignete Verbindungen b) sind weiterhin die in der DE-A-20 34 479 beschriebenen Addukte von aliphatischen Diaminen mit zwei primären Aminogruppen an α,β-ungesättigte Carbonsäuren. Dabei resultieren überwiegend N-Aminoalkyl-aminoalkancarbonsäuren, wie z. B. N-(2-aminoethyl)-2-aminoethancarbonsäuren. Die Alkandiyl-Einheiten weisen dabei vorzugsweise 2 bis 6 Kohlenstoffatome auf. Auf die DE-A-20 34 479 wird hier in vollem Umfang Bezug genommen.

Bei Einsatz von Verbindungen b) mit nur einer gegenüber Isocyanatgruppen reaktiven Gruppe wird die Einsatzmenge vorzugsweise so gewählt, dass Polymere mit einem Molekulargewicht von mindestens 1000 g/mol resultieren.

Geeignete Verbindungen b) mit einer gegenüber Isocyanatgruppen reaktiven Gruppe sind die zuvor genannten Monohydroxycarbonsäuren sowie Monothio- und Monoaminosäuren.

Beim Einsatz von Verbindungen b) mit in anionische Gruppen überführbaren Gruppen kann die teilweise oder vollständige Überführung in anionische Gruppen vor, während oder nach der Isocyanat-Polyaddition erfolgen. Die anionischen Gruppen liegen vorzugsweise in Form der Alkalimetall- oder Ammoniumsalze vor. Geeignete Neutralisationsmittel sind Alkalimetallbasen, wie Natronlauge, Kalilauge, Soda, Natriumhydrogencarbonat, Kaliumcarbonat oder Kaliumhydrogencarbonat sowie Ammoniak und Amine. Geeignete Amine sind z. B. C₁-C₆-Alkylamine, wie n-Propylamin und n-Butylamin, Dialkylamine, Trialkylamine, wie Diethylpropylamin, Dipropylmethylamin und Triethylamin etc.

Die erfindungsgemäß eingesetzten Polymere können zusätzlich zu den Komponenten a) und b) weitere Komponenten eingebaut enthalten, wie sie zur Herstellung von Polyurethanen bzw. Polyharnstoffen üblich sind. Dazu zählen z. B. von der Komponente b) verschiedene Verbindungen mit mindestens zwei gegenüber Isocyanatgruppen reaktiven Gruppen, wie sie üblicherweise als Kettenverlängerer eingesetzt werden.

Bei den zusätzlichen Komponenten der Polymere handelt es sich bevorzug um Diole, Diamine, Aminoalkohole, und Mischungen davon. Das Molekulargewicht dieser Verbindungen liegt vorzugsweise in einem Bereich von etwa 56 bis 500.

Bevorzugt werden als zusätzliche Komponente Diole eingesetzt. Brauchbare Diole sind z. B. Ethylenglykol, Propylenglykol, Butylenglykol, Neopentylglykol, Cyclohexandimethylol, Di-, Tri-, Tetra-, Penta- oder Hexaethylenglykol und Mischungen davon.

Geeignete zusätzliche Aminoalkohole sind z. B. 2-Aminoethanol, 2-(N-Methylamino)ethanol, 3-Aminopropanol, 4-Aminobutanol, 1-Ethylaminobutan-2-ol, 2-Amino-2-methyl-1-propanol, 4-Methyl-4-aminopentan-2-ol etc.

Geeignete zusätzliche Diamine sind z. B. Ethylendiamin, Propylendiamin, 1,4-Diaminobutan, 1,5-Diaminopentan und 1,6-Diaminohexan.

Geeignete Diamine sind auch Diamine der Formel R^{a}-NH-(CH₂)₂₋₃-NH₂, wobei R^{a} für C₈- bis C₂₂-Alkyl oder C₈- bis C₂₂-Alkenyl steht, wobei der Alkenylrest 1, 2 oder 3 nicht benachbarte Doppelbindungen aufweisen kann. Das Molekulargewicht dieser Diamine liegt vorzugsweise in einem Bereich von etwa 160 bis 400.

Weiterhin geeignete Diamine, die üblicherweise als Kettenverlängerer eingesetzt werden, sind z. B. Hexamethylendiamin, Piperazin, 1,2-Diaminocyclohexan, 1,3-Diaminocyclohexan, 1,4-Diaminocyclohexan, Neopentandiamin, 4,4'-Diaminodicyclohexylmethan etc.

Die zuvor genannten zusätzlichen Komponenten können einzeln oder als Gemische eingesetzt werden. Vorzugsweise werden keine Kettenverlängerer eingesetzt.

Die erfindungsgemäß eingesetzten Polymere können zusätzlich wenigstens eine weitere Verbindung mit einer gegenüber Isocyanatgruppen reaktiven Gruppe (Abstopper) eingebaut enthalten. Bei dieser Gruppe handelt es sich vorzugsweise um eine Hydroxyl- oder eine primäre oder sekundäre Aminogruppe. Geeignete Verbindungen mit einer gegenüber Isocyanatgruppen reaktiven Gruppe sind z. B. monofunktionelle Alkohole, wie Methanol, Ethanol, n-Propanol, Isopropanol etc. Geeignet sind auch Amine mit einer primäre oder sekundären Aminogruppe, wie z. B. Methylamin, Ethylamin, n-Propylamin, Isopropylamin, Dimethylamin, Diethylamin, Di-n-propylamin, Diisopropylamin etc. Geeignet sind auch Abstopper, die eine gegenüber Isocyanatgruppen reaktive Gruppe und wenigstens eine tertiäre Amino- und/oder Ammoniumgruppe aufweisen. Beispiele hierfür sind z. B. N,N-Dialkylaminoalkohole oder -amine.

Bevorzugt werden Polymere eingesetzt, die ein zahlenmittleres Molekulargewicht im Bereich von etwa 1000 bis 50000, bevorzugt 2000 bis 20000, aufweisen.

Bevorzugt weisen die Polymere einen Gehalt an anionischen Gruppen von 0,5 bis 3 mol/kg, insbesondere 1 bis 3 mol/kg, auf. Dabei werden gegebenenfalls im Polymer vorhandene in anionische Gruppen überführbare Gruppen nicht berücksichtigt.

Bevorzugt beträgt der Gehalt an Urethan- und/oder Harnstoffgruppen mindestens 2,5 mol/kg, besonders bevorzugt mindestens 3 mol/kg, insbesondere mindestens 4 mol/kg. Der maximale Gehalt an Urethan- und/oder Harnstoffgruppen ist eher unkritisch und beträgt z. B. 10 mol/kg, bevorzugt 8 mol/kg.

Ein weiterer Gegenstand der Erfindung ist ein Polymer, erhalten aus
a) wenigstens einem Polyisocyanat,
b) wenigstens einer Verbindung mit mindestens einer gegenüber Isocyanatgruppen reaktiven Gruppe und mindestens einer anionischen oder in eine anionische Gruppe überführbaren Gruppe,
sowie gegebenenfalls wenigstens einer weiteren, von b) verschiedenen Verbindung mit mindestens einer gegenüber Isocyanatgruppen reaktiven Gruppe, wobei die Komponente b) wenigstens eine Verbindung mit mindestens einer anionischen Gruppe aufweist oder im Polymer wenigstens ein Teil der in anionischen Gruppen überführbare Gruppen in Form ihrer Umsetzungsprodukte mit wenigstens einem Neutralisierungsmittel vorliegt und wobei der Gehalt an Urethan- und/oder Harnstoffgruppen des Polymers mindestens 2 mol/kg Polymer beträgt.

Bezüglich bevorzugter Komponenten a) und b), Molekulargewichten, Gehalten an Urethan und/oder Harnstoffgruppen und Gehalten an anionischen Gruppen der erfindungsgemäßen Polymere werden auf die Ausführungen zu erfindungsgemäß eingesetzten Polymeren Bezug genommen.

Bevorzugt sind Polymere, die nur aus Verbindungen der Komponenten a) und b) aufgebaut sind.

Die Herstellung der erfindungsgemäß eingesetzten und der erfindungsgemäßen Polymere erfolgt durch Umsetzung wenigstens eines Polyisocyanats a) mit wenigstens einer Verbindung der Komponente b) sowie gegebenenfalls zusätzlichen Verbindungen mit gegenüber Isocyanatgruppen reaktiven Gruppen. Dabei liegt das Verhältnis von NCO-Äquivalent der Komponente a) zu Äquivalent aktives Wasserstoffatom der Komponenten b) und gegebenenfalls zusätzlicher Verbindungen im Allgemeinen in einem Bereich von etwa 0,6:1 bis 1,4:1, bevorzugt 0,9:1 bis 1,1:1, insbesondere 0,9:1 bis 1:1. Die Reaktion kann ohne Lösungsmittel oder in einem geeigneten inerten Lösungsmittel oder Lösungsmittelgemisch erfolgen. Bevorzugt sind Lösungsmittel, die mit Wasser unbegrenzt mischbar sind. Bevorzugt sind weiterhin Lösungsmittel, die einen Siedepunkt bei Normaldruck im Bereich von etwa 40 bis 100 °C aufweisen. Geeignet sind aprotisch polare Lösungsmittel, z. B. Tetrahydrofuran, Essigsäureethylester, N-Methylpyrrolidon, Dimethylformamid, Dimethylacetamid und bevorzugt Ketone, wie Aceton und Methylethylketon. Gewünschtenfalls kann die Reaktion unter einer Inertgasatmosphäre, wie z. B. unter Stickstoff, erfolgen. Des Weiteren erfolgt die Reaktion vorzugsweise bei Umgebungsdruck oder unter erhöhtem Druck, insbesondere dem Eigendruck der Reaktanten unter den Reaktionsbedingungen. Die Reaktionstemperatur liegt vorzugsweise in einem Bereich von etwa 20 bis 180 °C, insbesondere 50 bis 150 °C. Werden als Komponente b) sowie gegebenenfalls als zusätzliche Komponenten überwiegend Verbindungen eingesetzt, die als gegenüber Isocyanatgruppen reaktiven Gruppen primäre und/oder sekundären Aminogruppen aufweisen, so kann die Reaktion gewünschtenfalls in einem Lösungsmittel oder Lösungsmittelgemisch erfolgen, welches aktive Wasserstoffatome aufweisen kann. Neben den zuvor genannten werden dann bevorzugt Alkohole wie Methanol und Ethanol, Gemische aus Alkoholen und Wasser, Gemische aus Ketonen und Wasser sowie Gemische aus Alkoholen und den zuvor genannten Ketonen eingesetzt. Weisen die resultierenden Polymere noch freie Isocyanatgruppen auf, so können diese abschließend inaktiviert werden. Die Reaktionszeit kann in einem Bereich von wenigen Minuten bis zu einigen Stunden liegen. Die Reaktion kann in Gegenwart üblicher Katalysatoren, wie z. B. Dibutylzinndilaurat, Zinn(II)octoat oder Diazabicyclo[2.2.2]octan durchgeführt werden. Geeignete Polymerisationsapparate sind dem Fachmann bekannt. Dazu zählen z. B. Rührkessel, die gewünschtenfalls mit Vorrichtungen zur Abfuhr der Reaktionswärme ausgestattet sind. Wird bei der Berstellung der Polymeren ein organisches Lösungsmittel eingesetzt, so kann dieses im Anschluss durch übliche, dem Fachmann bekannte Verfahren, z. B. durch Destillation bei vermindertem Druck, entfernt werden. Vor dem Abtrennen des Lösungsmittels kann dem Polymer zusätzlich Wasser zugegeben werden. Schwersiedende Lösungsmittel können gewünschtenfalls auch in der Lösung verbleiben, wobei deren Anteil jedoch vorzugsweise nicht mehr als 10 Gew.-%, bezogen auf das Gewicht des Polymers, betragen soll.

Die Polymere können in Mischungen oder in Kombination mit oberflächenaktiven Substanzen, wie z. B. anionischen, nichtionischen oder kationischen Tensiden bzw. Netzmitteln, eingesetzt werden. Sie können auch in Mischung mit weiteren Polymeren eingesetzt werden, wobei dadurch unter Umständen noch eine Verstärkung der oberflächenmodifizierenden Wirkung erzielt werden kann.

Die erfindungsgemäßen und erfindungsgemäß eingesetzten Polymere mit Urethan- und/oder Harnstoffgruppen und anionischen Gruppen eignen sich in vorteilhafter Weise zur Modifizierung der Oberflächeneigenschaften linien-, flächenförmiger oder dreidimensionaler Gebilde. Der Begriff "Modifizierung der Oberflächeneigenschaften" wird im Rahmen der vorliegenden Erfindung weit verstanden. Dazu zählt vor allem die Hydrophilierung, worunter in der Regel eine Verbesserung der Benetzbarkeit mit Wasser bzw. einer wässrigen Flüssigkeit verstanden wird. Eine verbesserte Benetzbarkeit geht in der Regel einher mit einer schnelleren und/ oder vermehrten Flüssigkeitsaufnahme und/oder einer verbesserten Flüssigkeitsretention, im Allgemeinen auch unter Druck. Zur "Modifizierung von Oberflächen" gehört erfindungsgemäß aber auch eine Verbesserung der Haftungswirkung, eine verbesserte antistatische Wirkung, eine Antibeschlagwirkung, verbesserte Trageeigenschaften, z. B. bei Hygieneprodukten, und/oder ein verbesserter Griff.

Die erfindungsgemäßen Gebilde eignen sich im Allgemeinen vorteilhaft für alle Einsatzbereiche, bei denen Wasser oder wässrige Flüssigkeiten mit in unmodifiziertem Zustand im Wesentlichen hydrophoben Materialien in Kontakt kommen. Dazu zählt insbesondere das rasche Aufsaugen und/oder der rasche Transport von Wasser in an sich hydrophobe Materialien. Die erfindungsgemäßen Gebilde sind weiterhin im Allgemeinen dort vorteilhaft einsetzbar, wo durch Modifizierung von Oberflächen im Sinne einer Hydrophilierung verbesserte Hafteigenschaften, verbesserte antistatische Eigenschaften, verbesserte Antibeschlageigenschaften, ein verbesserter Griff und/oder ein verbesserter Tragekomfort erreicht werden kann.

Die erfindungsgemäßen Gebilde eignen sich vorteilhaft in oder als Synthesefasern, Geweben, Gewirken, Vliesstoffen, Filzen, Textilverbundstoffen, wie z. B. Teppichen, kaschierten und laminierten Textilien etc. Sie eignen sich weiterhin in vorteilhafter Weise für den Einsatz in Windeln, Hygieneeinlagen, Putz- und Wischtüchern, Spültüchern, Servietten, Landwirtschafts- und/oder Geotextilien sowie für Filteranwendungen.

Die erfindungsgemäßen und erfindungsgemäß eingesetzten Polymere sind als Hydrophiliermittel für die oben genannten Materialien, insbesondere für Synthesefasern, beispielsweise solche aus Polyethylen, Polypropylen, Copolymeren aus Monoolefinen untereinander oder mit wenigstens einem weiteren radikalisch polymerisierbaren Monomer, Polyestern, Polyacrylnitril und Polyamiden geeignet. Außerdem eignen sich die Polymere zur Verbesserung der Bedruckbarkeit und Klebbarkeit von Filmen und Folien, beispielsweise solchen aus Polyethylen, Polypropylen, Polyvinylchlorid, Polytetrafluorethylen und Polyestern.

Außerdem lassen sich die antistatischen Eigenschaften von Filmen und Folien durch Verwendung der Polymere verbessern.

Die Verwendung der Polymere führt bei Formkörpern ebenfalls zu einer Verbesserung der Oberflächeneigenschaften, so dass diese besser bedruckbar oder beklebbar sind und bessere antistatische Eigenschaften besitzen. Typische Formkörper sind beispielsweise aus Polyethylen, Polypropylen, Polystyrol, Polyvinylchlorid, Polytetrafluorethylen, Polyestern, Polyacrylnitril, Styrol-Acrylnitril-Copolymeren (SAN), Acrylnitril-Butadien-Styrol-Terpolymeren (ABS), Polyamiden, wie Polyamid 6 oder Polyamid 6/6, Polyurethanen und/oder Mischungen der vorgenannten Kunststoffe aufgebaut.

Außerdem führt die Verwendung von Polymeren mit Urethan- und/oder Harnstoffgruppen und anionischen Gruppen zu einer Verbesserung der Oberflächenleitfähigkeit von hydrophoben, nichtleitenden Materialien, insbesondere den vorgenannten Kunststoffen, und verbessert damit deren antistatische Eigenschaften. Ferner sind die Polymere geeignet, die Beschlagsneigung von Kunststofffolien zu reduzieren.

Der Vorteil der erfindungsgemäßen Mittel gegenüber bekannten Hydrophiliermitteln liegt außerdem darin, dass sie nicht zu einer nennenswerten Herabsetzung der Oberflächenspannung von Wasser führen.

Die Ausrüstung der erfindungsgemäßen linien-, flächenförmigen oder dreidimensionalen Gebilde mit den Polymeren kann nach den Verfahren erfolgen, wie man sie üblicherweise zur Hydrophilierung der vorgenannten Gebilde mit Hydrophiliermitteln des Standes der Technik anwendet. Hierzu behandelt man das Gebilde mit einer verdünnten, vorzugsweise wässrigen Lösung des Polymers in einer für die Art des Gebildes üblichen Weise, z. B. durch Spülen, Tauchen, Besprühen, Bepflatschen oder ähnlichen Methoden, wie sie üblicherweise bei der Ausrüstung von textilen Geweben oder Folien eingesetzt werden. Der Polymergehalt der Lösungen liegt im Bereich von wenigstens 0,01 bis 20 Gew.-% und vorzugsweise 0,1 bis 10 Gew.-%, bezogen auf das Gewicht der Lösung. Vorzugsweise setzt man zur Behandlung wässrige Lösungen der Polymere ein. Die zur Hydrophilierung erforderliche Menge an Polymer wird von der Oberfläche absorbiert und verbleibt nach dem Trocknen auf ihr haften. Die zur Erzielung einer wirksamen Hydrophilierung erforderlichen Mengen stellen sich dabei automatisch ein und sind äußerst gering. Bei Gebilden mit glatter Oberfläche wie Folien und ähnlichen Gebilden reichen bereits 0,1 mg/m² Polymer aus.

In einer anderen Ausgestaltung des erfindungsgemäßen Verfahrens zur Hydrophilierung von Oberflächen kann man das Polymer auch dem Werkstoff, aus dem das Gebilde aufgebaut ist, zusetzen und anschließend hieraus das Gebilde herstellen. Beispielsweise kann man bei Ausrüstung von thermoplastischen Kunststoffen das Polymer als Feststoff mit dem Kunststoffmaterial kompoundieren. Das so ausgerüstete Kunststoffmaterial wird dann nach den üblichen Verfahren zu Folien, beispielsweise durch Extrusion, oder zu Fasermaterialien, beispielsweise durch ein Schmelzspinnverfahren, weiter verarbeitet.

Die einfache Anwendbarkeit der erfindungsgemäßen und erfindungsgemäß eingesetzten Polymere erlaubt den Einsatz in vielen Anwendungsbereichen, beispielsweise als Hydrophiliermittel für Vliesstoffe, die z. B. in Windeln, Hygieneeinlagen, Textilien, Landwirtschafts- oder Geotextilien oder Filteranlagen eingesetzt werden. Die mit den Polymeren ausgerüsteten Kunststoff fasern können ihrerseits zu Textilien weiterverarbeitet werden. Durch die Hydrophilierung wird in der Regel auch die Wasserdampfdurchlässigkeit und der Kapillartransport von Schweiß verbessert sowie das Anschmutzverhalten gegenüber vielen hydrophoben Schmutzarten verringert. Außerdem wird die Wiederablösbarkeit von Schmutz positiv beeinflusst. Weiterhin kann man die Polymere als Antistatikausrüstung für Kunststofffolien verwenden.

Ein geeignetes Maß zur Beurteilung der Hydrophilie/Hydrophobie der Oberfläche eines linien-, flächenförmigen oder dreidimensionalen Gebildes ist die Messung des Randwinkels von Wasser an der jeweiligen Oberfläche (siehe z. B. Römpp, Chemielexikon, 9. Auflage, S. 372 "Benetzung", Georg Thieme Verlag (1995)). Dabei spricht man in der Regel von hydrophoben Oberflächen, wenn der Kontaktwinkel von Wasser größer als 90° ist. Bevorzugt bewirkt der Einsatz wenigstens eines Polymers mit Urethan- und/oder Harnstoffgruppen und Ammoniumgruppen eine Abnahme des Randwinkels um mindestens 10°, bevorzugt um mindestens 30°, gegenüber der unmodifizierten hydrophoben Oberfläche.

Vorteilhafterweise werden bei den erfindungsgemäßen Gebilden, die aus dem Stand der Technik bekannten nachteiligen Auswirkungen auf die Grenzflächenspannung von wässrigen Lösungen sowie eine erhöhte Migrationsneigung in der Regel nicht beobachtet.

Vorteilhafterweise zeichnen sich die erfindungsgemäß eingesetzten Polymere sowie mit ihnen oberflächenmodifizierte Gebilde durch eine besonders gute Verträglichkeit mit Polymerschmelzen aus. Sie eignen sich somit in der Regel auch als Additive zu einer Schmelze von polymeren Faser- bzw. Formkörperrohstoffen. Die Polymere können jedoch auch als Nachbehandlungsmittel zur Modifizierung der Gebilde eingesetzt werden.

Die Erfindung wird anhand der folgenden nichteinschränkenden Beispiele näher erläutert.

### Beispiele

### I. Messmethoden

### I.1 Randwinkelmessung

Das jeweilige Substrat wird mit einer 0,5 gew.-%igen Lösung des Polymers 30 Minuten bei 21 °C unter Rühren behandelt. Die Probe wird unmittelbar nach der Behandlung getrocknet und die Randwinkel mit destilliertem Wasser bei Raumtemperatur bestimmt.

### 1.2 Messung der Hydrophilie

Die Messung erfolgte an einem Polypropylenvlies. Hierzu wird das Vlies mit einer wässrigen, 0,5 gew.-%igen Lösung des Polymers behandelt und anschließend getrocknet. Auf das zu messende Substrat wird ein Tropfen Wasser aufgesetzt. Die Benetzung des Vlieses durch das Wasser wird visuell mittels einer Punkteskala von 1 bis 10 beurteilt. Hierbei bedeuten 0 Punkte keine Benetzung und 10 Punkte ein sofortiges Zerlaufen des Tropfens.

### I.3 Bestimmung der Affinität durch Reflektometrie

Eine 0,01 gew.-%ige Lösung des Polymers wird auf einen pH-Wert von 7 eingestellt. Ein auf einem Siliziumwafer aufgebrachter Polypropylenfilm wird bei Raumtemperatur mit dieser Lösung mit einer Flussrate von 0,7 ml pro Minute senkrecht angeströmt. Durch die Adsorption des Polymeren wird eine Veränderung des Detektionssignals gegenüber einer polymerfreien Lösung beobachtet. Durch eine Computer-gestützte Modellierung des Strahlengangs erhält man aus dieser Veränderung eine Belegung.

### II. Herstellungsbeispiele

### Beispiel 1: Polyharnstoff aus Isophorondiisocyanat und dem Michael-Addukt aus Ethylendiamin und Natriumacrylat

In einem Vierhalskolben, der mit Rührer, Tropftrichter, Thermometer und Rückflusskühler ausgestattet war, wurden 82,0 g (0,20 mol) einer 40 %igen wässrigen Lösung des Michael-Addukts aus Ethylendiamin und Natriumacrylat (bestehend im Wesentlichen aus dem Natriumsalz der 2-Aminoethyl-2-aminoethancarbonsäure) in einer Mischung aus 200 g Aceton und 200 g Wasser gelöst. Dazu wurden 44,4 g (0,2 mol) Isophorondiisocyanat so zugetropft, dass die Temperatur nicht über 30 °C stieg. Das Reaktionsgemisch wurde zwei Stunden bei 50 °C gerührt und anschließend das Aceton unter vermindertem Druck abdestilliert. Man erhielt eine Polyharnstofflösung mit einem Feststoffgehalt von 23,0 Gew.-%, einem rechnerischen Gehalt an Harnstoffgruppen von 5,18 mol/kg und einem Gehalt an anionischen Gruppen von 2,59 mol/kg.

### Beispiel 2: Polyharnstoff aus Isophorondiisocyanat und Natriumsalz der 2-Aminoethyl-2-aminoethansulfonsäure

Analog der Herstellungsvorschrift für den Polyharnstoff 1 wurde eine Polyharnstoff aus 84,0 g (0,2 mol) Natriumsalz der 2-Aminoethyl-2-aminoethansulfonsäure und 44,4 g (0,2 mol) Isophorondiisocyanat hergestellt. Man erhielt eine Polyharnstofflösung mit einem Feststoffgehalt von 29,3 Gew.-%, einem rechnerischen Gehalt an Harnstoffgruppen von 4,63 mol/kg und einem Gehalt an anionischen Gruppen von 2,31 mol/kg.

### Beispiel 3: Polyurethan aus Isophorondiisocyanat und Dimethylolpropionsäure

In einem Vierhalskolben, der mit Rührer, Tropftrichter, Thermometer und Rückflusskühler ausgestattet war, wurden 67,0 g (0,50 mol) Dimethylolpropionsäure in 210 g Aceton zum Rückfluss erhitzt. Dazu wurden 111,1 g (0,5 mol) Isophorondiisocyanat zugegeben. Nach zwei Stunden am Rückfluss wurden 37,5 g (0,375 mol; 75 mol-% bezogen auf DMPA) Triethylamin zugegeben. Anschließend gab man 300 g Wasser zu und destillierte das Aceton unter vermindertem Druck ab. Man erhielt eine Polyurethanlösung mit einem Feststoffgehalt von 38 Gew.-%, einem rechnerischen Gehalt an Urethangruppen von 4,64 mol/kg und einem Gehalt an anionischen Gruppen von 1,74 mol/kg.

### III. Anwendungstechnische Beispiele

### III.1 Messung des Randwinkels

Die Messung des Randwinkels erfolgte wie zuvor beschrieben. Die Ergebnisse sind in der folgenden Tabelle 1 wiedergegeben.

**Tabelle 1:**

| Beispiel-Nr. | Additiv | Randwinkel |
|---|---|---|
| 1 (Vergleich) | kein Additiv | 105° |
| 2 (Vergleich) | handelsübliches Alkoholethoxilat | 58° |
| 3 (Vergleich) | handelsüblicher, hydrophilierend wirkender Polyetherester | 86° |
| 4 | Beispiel 1 | 1° |
| 5 | Beispiel 2 | 8° |
| 6 | Beispiel 3 | 50° |

### III.2 Messung der Hydrophilie

Die Messung der Hydrophilie erfolgte wie zuvor beschrieben. Die Ergebnisse sind in der folgenden Tabelle 2 wiedergegeben.

**Tabelle 2:**

| Beispiel-Nr. | Additiv | Hydrophilie |
|---|---|---|
| 7 (Vergleich) | kein Additiv | 0 |
| 8 (Vergleich) | handelsüblicher, hydrophilierend wirkender Polyetherester | 3 |
| 9 | Beispiel 1 | 9 |
| 10 | Beispiel 2 | 10 |
| 11 | Beispiel 3 | 9 |

### III.3 Bestimmung der Affinität

Die Bestimmung der Affinität erfolgte wie zuvor beschrieben. Die Ergebnisse sind in der folgenden Tabelle 3 wiedergegeben.

**Tabelle 3:**

| Beispiel-Nr. | Additiv | Affinität |
|---|---|---|
| 12 (Vergleich) | handelsübliches Polycarboxylat | wird durch Wasser wieder abgespült |
| 13 | Beispiel 1 | bleibt beim Spülen mit Wasser auf der PP-Schicht |
| 14 | Beispiel 2 | bleibt beim Spülen mit Wasser auf der PP-Schicht |
| 15 | Beispiel 3 | bleibt beim Spülen mit Wasser auf der PP-Schicht |

Die anwendungstechnischen Beispiele zeigen, dass es mit den erfindungsgemäßen und erfindungsgemäß eingesetzten Polymeren möglich ist, Polypropylen-Oberflächen effektiv zu hydrophilieren. Dabei zeigt keines der erfindungsgemäßen Beispiele ein signifikantes Schäumvermögen, wohingegen das als Vergleichssubstanz eingesetzte handelsübliche Alkoholethoxilat, wie die üblichen aus dem Stand der Technik bekannten nichtionischen Tenside, ein starkes bis sehr starkes Schäumvermögen zeigt. Weiterhin wird bei Einsatz der Polymere keine signifikante Herabsetzung der Oberflächenspannung einer wässrigen Lösung beobachtet, wohingegen das als Vergleichssubstanz eingesetzte Alkoholethoxilat, wie auch ganz allgemein die aus dem Stand der Technik bekannten und als Hydrophiliermittel eingesetzten Tenside die Oberflächenspannung stark herabsetzt.

## Patentansprüche

1. Linien-, flächenförmiges oder dreidimensionales Gebilde, enthaltend zumindest auf seiner Oberfläche eine hydrophilierend wirkende Menge wenigstens eines Polymers, das Urethan- und/oder Harnstoffgruppen sowie anionische Gruppen aufweist, wobei der Gehalt an Urethan- und/oder Harnstoffgruppen mindestens 2 mol/kg Polymer beträgt, wobei das Polymer einen Gehalt an anionischen Gruppen von 0,5 bis 5 mol/kg aufweist und wobei die Ausrüstung des Gebildes mit dem Polymeren durch Behandeln des Gebildes mit einer verdünnten Lösung des Polymers erfolgt, wobei der Polymergehalt der Lösung im Bereich von wenigstens 0,01 bis 20 Gew.-%, bezogen auf das Gewicht der Lösung, liegt, oder man zur Hydrophilierung der Oberflächen das Polymer dem Werkstoff, aus dem das Gebilde aufgebaut ist, zusetzt und anschließend hieraus das Gebilde herstellt,
und wobei das Gebilde ein linien- oder flächenförmiges textiles Gebilde, eine Kunststofffolie oder ein Kunststoffformkörper ist.

2. Gebilde nach Anspruch 1, worin das linien- oder flächenförmige textile Gebilde aus Kunststofffasern aufgebaut ist.

3. Gebilde nach einem der vorhergehenden Ansprüche, wobei das Polymer erhalten ist aus
a) wenigstens einem Polyisocyanat,
b) wenigstens einer Verbindung mit mindestens einer gegenüber Isocyanatgruppen reaktiven Gruppe und zusätzlich mindestens einer anionischen oder in eine anionische Gruppe überführbaren Gruppe,
sowie gegebenenfalls wenigstens einer weiteren, von b) verschiedenen Verbindung mit mindestens einer gegenüber Isocyanatgruppen reaktiven Gruppe,
wobei die Komponente b) wenigstens eine Verbindung mit mindestens einer anionischen Gruppe aufweist oder im Polymer wenigstens ein Teil der in anionische Gruppen überführbaren Gruppen in Form ihrer Umsetzungsprodukte mit wenigstens einem Neutralisierungsmittel vorliegt.

4. Gebilde nach Anspruch 3, wobei das Verhältnis von NCO-Äquivalenten der Komponente a) zu Äquivalenten aktiver Wasserstoffatome der Komponenten b) und gegebenenfalls zusätzlicher Verbindungen in einem Bereich von 0,9:1 bis 1,1:1 liegt.

5. Verwendung von Polymeren, die Urethan- und/oder Harnstoffgruppen sowie anionische Gruppen aufweisen, wobei der Gehalt an Urethan- und/oder Harnstoffgruppen mindestens 2 mol/kg Polymer beträgt und wobei das Polymer einen Gehalt an anionischen Gruppen von 0,5 bis 5 mol/kg aufweist, die erhalten sind aus
a) wenigstens einem Polyisocyanat,
b) wenigstens einer Verbindung mit mindestens einer gegenüber Isocyanatgruppen reaktiven Gruppe und zusätzlich mindestens einer anionischen oder in eine anionische Gruppe überführbaren Gruppe,
sowie gegebenenfalls wenigstens einer weiteren, von b) verschiedenen Verbindung mit mindestens einer gegenüber Isocyanatgruppen reaktiven Gruppe,
wobei die Komponente b) wenigstens eine Verbindung mit mindestens einer anionischen Gruppe aufweist oder im Polymer wenigstens ein Teil der in anionische Gruppen überführbaren Gruppen in Form ihrer Umsetzungsprodukte mit wenigstens einem Neutralisierungsmittel vorliegt, zur Modifizierung der Oberflächeneigenschaften von linien- oder flächenförmigen textilen Gebilden, Kunststofffolien oder Kunststoffformkörpern.

6. Verfahren zur Modifizierung der Oberflächeneigenschaften eines linien-, flächenförmigen oder dreidimensionalen Gebildes, bei dem man auf die Oberfläche davon eine wirksame Menge eines Polymers aufbringt, das Urethan- und/oder Harnstoffgruppen sowie anionische Gruppen aufweist, wobei der Gehalt an Urethan- und/oder Harnstoffgruppen mindestens 2 mol/kg Polymer beträgt und wobei das Polymer einen Gehalt an anionischen Gruppen von 0,5 bis 5 mol/kg aufweist, das erhalten ist aus
a) wenigstens einem Polyisocyanat,
b) wenigstens einer Verbindung mit mindestens einer gegenüber Isocyanatgruppen reaktiven Gruppe und zusätzlich mindestens einer anionischen oder in eine anionische Gruppe überführbaren Gruppe, sowie gegebenenfalls wenigstens einer weiteren, von b) verschiedenen Verbindung mit mindestens einer gegenüber Isocyanatgruppen reaktiven Gruppe,
wobei die Komponente b) wenigstens eine Verbindung mit mindestens einer anionischen Gruppe aufweist oder im Polymer wenigstens ein Teil der in anionische Gruppen überführbaren Gruppen in Form ihrer Umsetzungsprodukte mit wenigstens einem Neutralisierungsmittel vorliegt, und wobei das Gebilde ein linien- oder flächenförmiges textiles Gebilde, eine Kunststofffolie oder ein Kunststoffformkörper ist.

7. Verfahren zur Modifizierung der Oberflächeneigenschaften eines linien-, flächenförmigen oder dreidimensionalen Gebildes, bei dem man den Werkstoff, aus dem das Gebilde besteht, mit einer wirksamen Menge eines Polymers, das Urethan- und/oder Harnstoffgruppen sowie anionische Gruppen aufweist, wobei der Gehalt an Urethan- und/oder Harnstoffgruppen mindestens 2 mol/kg Polymer beträgt und wobei das Polymer einen Gehalt an anionischen Gruppen von 0,5 bis 5 mol/kg aufweist, das erhalten ist aus
a) wenigstens einem Polyisocyanat,
b) wenigstens einer Verbindung mit mindestens einer gegenüber Isocyanatgruppen reaktiven Gruppe und zusätzlich mindestens einer anionischen oder in eine anionische Gruppe überführbaren Gruppe,
sowie gegebenenfalls wenigstens einer weiteren, von b) verschiedenen Verbindung mit mindestens einer gegenüber Isocyanatgruppen reaktiven Gruppe,
wobei die Komponente b) wenigstens eine Verbindung mit mindestens einer anionischen Gruppe aufweist oder im Polymer wenigstens ein Teil der in anionische Gruppen überführbaren Gruppen in Form ihrer Umsetzungsprodukte mit wenigstens einem Neutralisierungsmittel vorliegt, modifiziert und hieraus das Gebilde herstellt,
wobei das Gebilde ein linien- oder flächenförmiges textiles Gebilde, eine Kunststofffolie oder ein Kunststoffformkörper ist.

## Claims

1. A linear, sheet-like, or three-dimensional structure comprising, at least on its surface, a hydrophilicizing amount of at least one polymer which has urethane groups and/or urea groups, and also anionic groups, where the content of urethane groups and/or urea groups is at least 2 mol/kg of polymer, where the polymer has a content of from 0.5 to 5 mol/kg of anionic groups, and the method of providing the polymers to the structure treats the structure with a dilute solution of the polymer, where the polymer content of the solution is in the range from at least 0.01 to 20% by weight, based on the weight of the solution, or, to hydrophilicize the surfaces, the polymer is added to the material of which the structure is composed before this is used to produce the structure, and where the structure is a linear or sheet-like textile structure, a plastics film or a plastics molding.

2. The structure according to claim 1, in which the linear or sheet-like textile structure is composed of synthetic fibers.

3. The structure according to any of the preceding claims, where the polymer is obtained from
a) at least one polyisocyanate,
b) at least one compound having at least one group reactive toward isocyanate groups and also having at least one group which is anionic or capable of conversion into an anionic group,
and also, where appropriate, from at least one other compound which differs from b) and has at least one group reactive toward isocyanate groups,
where component b) has at least one compound having at least one anionic group, or where at least some of the groups capable of conversion into anionic groups in the polymer are present in the form of the products of their reaction with at least one neutralizing agent.

4. The structure according to claim 3, where the ratio of NCO equivalents of component a) to equivalents of active hydrogen atoms of component b) and, where appropriate, of additional compounds is in the range from 0.9:1 to 1.1:1.

5. The use of polymers which have urethane groups and/or urea groups, and also anionic groups, where the content of urethane groups and/or urea groups is at least 2 mol/kg of polymer and where the polymer has from 0.5 to 5 mol/kg content of anionic groups, where these are obtained from
a) at least one polyisocyanate,
b) at least one compound having at least one group reactive toward isocyanate groups and also having at least one group which is anionic or capable of conversion into an anionic group,
and also, where appropriate, from at least one other compound which differs from b) and has at least one group reactive toward isocyanate groups,
where component b) has at least one compound having at least one anionic group, or where at least some of the groups capable of conversion into anionic groups in the polymer are present in the form of the products of their reaction with at least one neutralizing agent, for modifying the surface properties of linear or sheet-like textile structures, plastics films or plastics moldings.

6. A process for modifying the surface properties of a linear, sheet-like, or three-dimensional structure, by applying, to the surface thereof, an effective amount of a polymer which has urethane groups and/or urea groups, and also anionic groups, where the content of urethane groups and/or urea groups is at least 2 mol/kg of polymer and where the polymer has from 0.5 to 5 mol/kg content of anionic groups, which polymer is obtained from
a) at least one polyisocyanate,
b) at least one compound having at least one group reactive toward isocyanate groups and also having at least one group which is anionic or capable of conversion into an anionic group,
and also, where appropriate, from at least one other compound which differs from b) and has at least one group reactive toward isocyanate groups,
where component b) has at least one compound having at least one anionic group, or where at least some of the groups capable of conversion into anionic groups in the polymer are present in the form of the products of their reaction with at least one neutralizing agent, and where the structure is a linear or sheet-like textile structure, a plastics film or a plastics molding.

7. A process for modifying the surface properties of a linear, sheet-like, or three-dimensional structure, by modifying the material of which the structure is composed with an effective amount of a polymer which has urethane groups and/or urea groups, and also anionic groups, where the content of urethane groups and/or urea groups is at least 2 mol/kg of polymer and where the polymer has from 0.5 to 5 mol/kg content of anionic groups, which polymer is obtained from
a) at least one polyisocyanate,
b) at least one compound having at least one group reactive toward isocyanate groups and also having at least one group which is anionic or capable of conversion into an anionic group,
and also, where appropriate, from at least one other compound which differs from b) and has at least one group reactive toward isocyanate groups,
where component b) has at least one compound having at least one anionic group, or where at least some of the groups capable of conversion into anionic groups in the polymer are present in the form of the products of their reaction with at least one neutralizing agent, and producing the structure therefrom, where the structure is a linear or sheet-like textile structure, a plastics film or a plastics molding.

## Revendications

1. Article linéaire, plan ou tridimensionnel, comportant au moins sur sa surface une quantité à effet d'hydrophilisation d'au moins un polymère qui comporte des groupes uréthanne et/ou urée ainsi que des groupes anioniques, la teneur en groupes uréthanne et/ou urée étant d'au moins 2 moles/kg, le polymère ayant une teneur en groupes anioniques de 0,5 à 5 moles/kg et l'article étant muni du polymère par traitement de l'article par une solution diluée du polymère, la teneur en polymère de la solution se situant dans la plage d'au moins 0,01 à 20 % en poids, par rapport au poids de la solution, ou pour l'hydrophilisation des surfaces on ajoute le polymère au matériau à base duquel est constitué l'article et ensuite on fabrique l'article à partir de ce matériau,
et l'article étant un article textile linéaire ou plan, un film en matière plastique ou un corps moulé en matière plastique.

2. Article selon la revendication 1, dans lequel l'article textile linéaire ou plan est constitué de fibres en matière plastique.

3. Article selon l'une quelconque des revendications précédentes, dans lequel le polymère est obtenu à partir
a) d'au moins un polyisocyanate,
b) d'au moins un composé comportant au moins un groupe réactif vis-à-vis de groupes isocyanate et en outre au moins un groupe anionique ou susceptible d'être converti en un groupe anionique,
ainsi qu'éventuellement d'au moins un autre composé différent de b), comportant au moins un groupe réactif vis-à-vis de groupes isocyanate,
le composant b) comportant au moins un composé comportant au moins un groupe anionique ou dans le polymère au moins une partie des groupes susceptible d'être convertis en groupes anioniques étant présents sous forme de leurs produits de réaction avec au moins un agent de neutralisation.

4. Article selon la revendication 3, dans lequel le rapport des équivalents NCO du composant a) aux équivalents d'atomes d'hydrogène actif des composants b) et éventuellement de composés supplémentaires se situe dans une plage allant de 0,9:1 à 1,1:1.

5. Utilisation de polymères qui comportent des groupes uréthanne et/ou urée ainsi que des groupes anioniques, la teneur en groupes uréthanne et/ou urée étant d'au moins 2 moles/kg de polymère et le polymère ayant une teneur en groupes anioniques de 0,5 à 5 moles/kg, qui sont obtenus à partir
a) d'au moins un polyisocyanate,
b) d'au moins un composé comportant au moins un groupe réactif vis-à-vis de groupes isocyanate et en outre au moins un groupe anionique zou susceptible d'être converti en un groupe anionique,
ainsi qu'éventuellement d'au moins un autre composé différent de b), comportant au moins un groupe réactif due groupes isocyanate,
le composant b) comportant au moins un composé comportant au moins un groupe anionique ou dans le polymère au moins une partie des groupes susceptibles d'être convertis en groupes anioniques étant présents sous forme de leurs produits de réaction avec au moins un agent de neutralisation, pour la modification des propriétés superficielles d'articles textiles linéaires ou plans, de films en matière plastique ou de corpus moulés en matière plastique.

6. Procédé pour la modification des propriétés superficielles d'un article linéaire, plan ou tridimensionnel, dans lequel on applique sur la surface de cet article une quantité efficace d'un polymère qui comporte des groupes uréthanne et/ou, urée ainsi que des groupes anioniques, la teneur en groupes uréthanne et/ou urée étant d'au moins 2 moles/kg et le polymère ayant une teneur en groupes anioniques de 0,5 à 5 moles/kg, qui est obtenu à partir
a) d'au moins un polyisocyanate,
b) d'au moins un composé comportant au moins un ' groupe réactif vis-à-vis de groupes isocyanate et en outre au moins un groupe anionique ou susceptible d'être converti en un groupe anionique,
ainsi qu'éventuellement d'au moins un autre composé différent de b), comportant au moins un groupe réactif vis-à-vis de groupes isocyanate ;
le composant b) comportant au moins un composé comportant au moins un groupe anionique ou dans le polymère au moins une partie des groupes susceptibles d'être convertis en groupes anioniques étant présents sous forme de leurs produits de réaction avec au moins un agent de neutralisation, et l'article étant un article textile linéaires ou plan, un film en matière plastique ou un corps moulé en matière plastique.

7. Procédé pour la modification des propriétés superficielles d'un article linéaire, plan ou tridimensionnel, dans lequel on modifie le matériau à base duquel est constitué l'article, par une quantité efficace d'un polymère qui comporte des groupes uréthanne et/ou urée ainsi que des groupes anioniques, la teneur en groupes uréthanne et/ou urée étant d'au moins 2 moles/kg et le polymère ayant une teneur en groupes anioniques de 0,5 à 5 moles/kg, qui est obtenu à partir
a) d'au moins un polyisocyanate,
b) d'au moins un composé comportant au moins un groupe réactif vis-à-vis de groupes isocyanate et en outre au moins un groupe anionique ou susceptible d'être converti en un groupe anionique,
ainsi qu'éventuellement, d'au moins un autre composé différent de b), comportant au moins un groupe réactif vis-à-vis de groupes isocyanate,
le composant b) comportant au moins un composé comportant au moins un groupe anionique ou dans le polymère au moins une partie des groupes susceptibles d'être convertis en groupes anioniques étant présents sous fourme de leurs produits de réaction avec au moins un agent de neutralisation, et on fabrique l'article à partir de ce matériau,
l'article étant un article textile linéaire ou plan, un film en matière plastique ou un corps moulé en matière plastique.
